# EUROPÄISCHE PATENTSCHRIFT

(11) **EP 2 960 490 B1**
(45) Veröffentlichungstag und Bekanntmachung des Hinweises auf die Patenterteilung: **12.07.2017**
(21) Anmeldenummer: 15001593.1
(22) Anmeldetag: 27.05.2015
(51) Int. Cl.: F03D 80/00, F03D 7/02

(54) **DREHWERK ZUR VERDREHUNG EINES DREHBAR AN EINER WINDENERGIEANLAGE GELAGERTEN BAUTEILS**
ROTATING TOOL FOR ROTATING A COMPONENT THAT CAN BE ROTATED ON A BEARING OF WIND ENERGY PLANT
OUTIL ROTATIF DESTINÉ À LA TORSION D'UN COMPOSANT MONTÉ EN ROTATION SUR UNE ÉOLIENNE

(30) Priorität: 28.06.2014 DE 102014009306
(43) Veröffentlichungstag der Anmeldung: 30.12.2015
(73) Patentinhaber: Senvion GmbH, 22297 Hamburg (DE)
(72) Erfinder: Trede, Alf, 25885 Immenstedt (DE); Eusterbarkey, Carsten, 25813 Simonsberg (DE)
(74) Vertreter: Glawe, Delfs, Moll

(56) Entgegenhaltungen:
- WO-A1-2013/045076
- WO-A2-2013/045644
- US-A1- 2013 039 763

## Beschreibung

Die Erfindung betrifft ein Drehwerk zur Verdrehung eines ersten Bauteils einer Windenergieanlage gegenüber einem zweiten Bauteil der Windenergieanlage nach dem Oberbegriff des Anspruchs 1 sowie ein Verfahren zur Verschiebung eines Antriebs eines erfindungsgemäßen Drehwerks und eine Windenergieanlage mit einem erfindungsgemäßen Drehwerk.

Drehwerke der eingangs genannten Art werden an Windenergieanlagen eingesetzt, um beispielsweise ein drehbar an einer Rotornabe gelagertes Rotorblatt gegenüber der Rotornabe zu verdrehen. Solche Drehwerke dienen auch dazu, die Gondel bzw. einen Maschinenträger mit einer Gondel gegenüber dem Anlagenturm zu verdrehen. Die Verdrehung eines Rotorblatts ist bekannt als Pitcheinstellung und die Verdrehung der Anlagengondel gegenüber dem Turm ist bekannt als Azimuteinstellung.

Windenergieanlagen werden bevorzugt in Gegenden eingesetzt, die besonders windreich sind, zum Beispiel im Offshorebereich. Die Rotorblätter und die Anlagengondel sind dabei üblicherweise starken Winden ausgesetzt und müssen starken Windböen standhalten. Die Kräfte, die notwendig sind, um die Rotorblätter oder die Anlagengondel zu drehen, steigen mit den Windgeschwindigkeiten.

In den Windenergieanlagen werden häufig Drehwerkantriebe eingesetzt, die einerseits hohe Drehmomente erzeugen und gleichzeitig unanfällig sind gegen von Windböen und hohen Windgeschwindigkeiten eingetragene Kraftstöße. Solche Kraftstöße wirken über das Drehwerk auf die Komponenten des Antriebs und führen zu hohen Materialbelastungen. Um die Belastungen der Antriebskomponenten möglichst gering zu halten, ist ein passgenaues Eingreifen einer Verzahnung eines Antriebsritzels in eine Verzahnung eines Zahnkranzes des Drehwerks unabdingbar.

Zur Einstellung des Zahnflankenspiels ist das Antriebsritzel üblicherweise gegenüber dem Zahnkranz verschiebbar. Die Justierung des Zahnflankenspiels ist einerseits notwendig, um Ungenauigkeiten bei der Herstellung der Bauteile der Windenergieanlage auszugleichen und andererseits um einen Verschleiß auszugleichen, der sich während der Einsatzdauer der Windenergieanlage einstellt. Die Belastung und damit einhergehend der Verschleiß der Zahnflanken steigt mit dem Drehmoment, das der Antriebsmotor abgibt, um die Bauteile gegeneinander zu verdrehen. Auch Windböen, die auf das Drehwerk wirken, führen zu erhöhter Belastung der Antriebskomponenten und zu einem Verschleiß zwischen den Drehrädern des Drehwerks. Der Verschleiß ist umso höher, je ungenauer das Zahnflankenspiel eingestellt ist. Eine regelmäßige Nachjustierung ist deshalb angeraten.

Aus dem Stand der Technik sind zwei Arten bekannt, wie das Zahnflankenspiel zwischen dem Antriebsritzel und dem Zahnkranz eingestellt werden kann. Bei beiden bekannten Varianten wird das Gehäuse des Drehantriebs passgenau in einen Rezess einer Haltung, also in ein Aufnahmeloch bzw. in eine Aufnahmebohrung, eingesteckt und fixiert. Kräfte, die auf das Antriebsritzel wirken, werden über das Gehäuse des Antriebs auf die Halterung übertragen und an das den Antrieb tragende Bauteil der Windenergieanlage abgegeben.

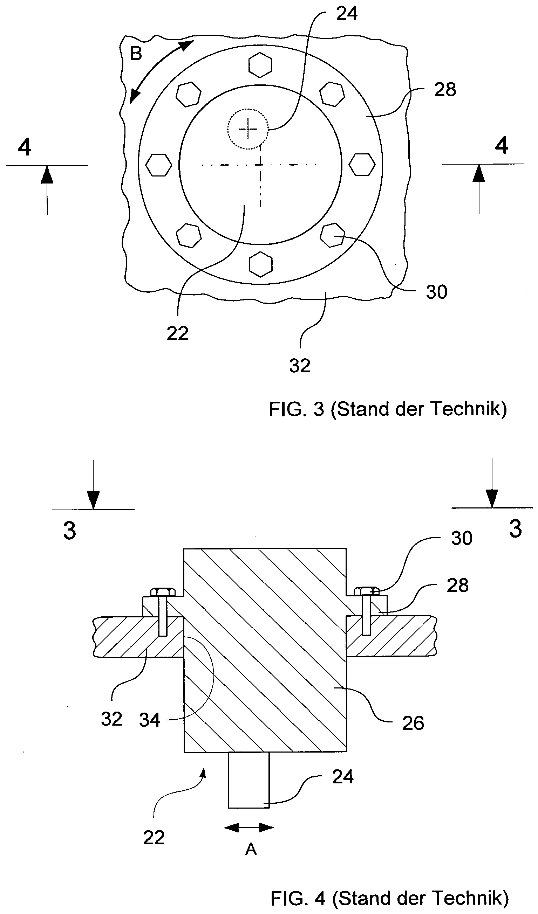

Zur Einstellung des Zahnflankenspiels ist einerseits bekannt, die Antriebswelle des Drehantriebs mit dem Antriebsritzel exzentrisch zu dem Gehäuse des Antriebs auszuführen. Um das Ritzel des Drehantriebs gegenüber dem Zahnkranz zu verschieben, wird das Antriebsgehäuse in dem passgenauen Rezess der Antriebshalterung gedreht. Die sich dabei auf einer Kreisbahn bewegende Antriebswelle mit dem Antriebsritzel wird somit dichter an den Zahnkranz geführt. Für eine Verdrehung des Antriebs müssen zunächst alle Befestigungsbolzen, die das Gehäuse des Drehantriebs mit der Antriebshalterung verbinden, gelöst werden, vollständig aus den dafür vorgesehenen Flanschbohrungen entfernt werden und nach der Drehung des Antriebs wieder befestigt werden. Die Antriebshalterung wird auch als Antriebskonsole oder als Antriebstisch bezeichnet. Diese erste Variante ist in den Figuren 3 und 4 der vorliegenden Anmeldung verdeutlicht.

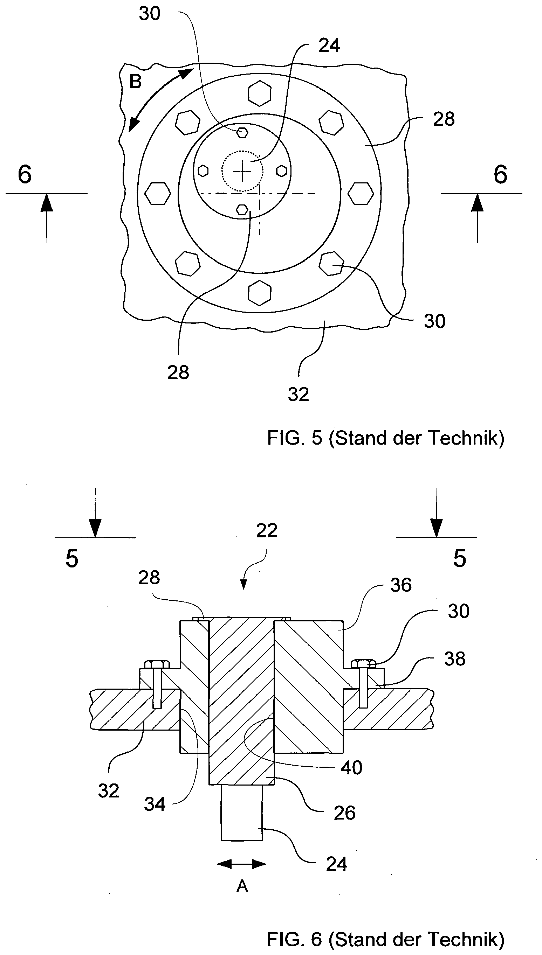

Eine zweite bekannte Variante zur Verstellung des Zahnflankenspiels wird anhand der Figuren 5 und 6 der vorliegenden Anmeldung erläutert. In der zweiten Variante wird der Drehantrieb passgenau in eine exzentrische Aufnahme eines zylindrischen Exzentertopfes eingesteckt. Der Exzentertopf wird schließlich passgenau in einen Rezess einer Antriebshalterung eingesetzt. Der Exzentertopf wird typischerweise über einen kragenartigen Flansch mit Befestigungsbolzen an der Antriebshalterung befestigt. In der gleichen Art wird auch der Antrieb an dem Exzentertopf befestigt.

Zur Einstellung des Zahnflankenspiels, werden in dieser zweiten Variante die Befestigungsbolzen, die den Exzentertopf mit der Antriebshalterung verbinden, allesamt gelöst und entfernt, der Exzentertopf wird in dem Rezess der Antriebshalterung gedreht und anschließend wieder mit den Befestigungsbolzen an der Antriebshalterung befestigt. Bei dieser Variante wird der Antrieb nicht von dem Exzentertopf gelöst. Der Antrieb ist exzentrisch in dem Exzentertopf angeordnet und beschreibt, bei der Drehung des Exzentertopfes, zusammen mit dem Antriebsritzel eine kreisbahnförmige Bewegung, so dass der Abstand des Ritzels zu dem Zahnkranz über die Drehung des Exzentertopfes eingestellt werden kann.

In beiden bekannten Varianten ist eine stufenweise Verstellung des Abstandes zwischen dem Antriebsritzel und dem Zahnkranz vorgesehen. Die Stufen werden durch die Verteilung der für die Befestigungsbolzen vorgesehenen Bohrungen entlang des Befestigungskragens des Antriebes bzw. des Exzentertopfes bestimmt.

Nachteilig bei den bekannten Drehwerken ist, dass der Antrieb allein oder der Antrieb mit einem Exzentertopf gedreht werden muss. Aufgrund der notwendigen Drehung müssen die an den Drehantrieb angeschlossenen Versorgungsleitungen, wie zum Beispiel Leitungen für Hydraulikflüssigkeiten, elektrische Energie, Kühlflüssigkeiten und Leitungen zur Signalübertragung, besonders flexibel an dem Antrieb bzw. in der Windenergieanlage angeordnet sein. Alternativ müssen die Versorgungsleitungen zunächst von dem Antrieb abgetrennt und nach der Verdrehung des Antriebes neu positioniert werden. Bei der Verdrehung des gesamten Antriebs ist auch nicht gewährleistet, dass Ölabläufe, Klemmkästen und insbesondere Winkelantriebe nach der Verdrehung richtig ausgerichtet sind.

Ein weiterer Nachteil der bekannten Vorrichtungen ist, dass die Verdrehung des Antriebsgehäuses bzw. des Exzentertopfes in der Antriebshalterung durch den passgenauen Sitz in dem Rezess einen hohen Kraftaufwand benötigt. Dabei kommt zum Tragen, dass ein großer Durchmesser des Antriebsgehäuses bzw. des Exzentertopfes große Reibflächen bedingt und bei der Drehung hohe Reibkräfte zu überwinden sind. Die engen Passungen an den Aufnahmerezessen können zudem nur schwer gegen Korrosion geschützt werden. Eine Demontage und eine Verdrehung des Antriebs bzw. des Exzentertopfes ist bei korrodierten Rezessen sehr zeit- und arbeitsaufwändig. Das Dokument WO2013/045644 offenbart ein typisches System des Stands der Technik gemäß dem Oberbegriff des Anspruchs 1. Davon ausgehend ist Aufgabe der vorliegenden Erfindung, ein verbessertes Drehwerk, ein Verfahren und eine Windenergieanlage bereitzustellen, bei dem ein Zahnflankenspiel einfach und mit geringem Kraftaufwand einstellbar ist, bei gleichzeitig geringer Verdrehung des Antriebsgehäuses.

Diese Aufgabe wird gelöst durch das erfindungsgemäße Drehwerk mit den Merkmalen des Anspruchs 1, das Verfahren gemäß Anspruch 9 und die Windenergieanlage gemäß Anspruch 11. Bevorzugte Ausgestaltungen der Erfindung sind in den Unteransprüchen angegeben.

Erfindungsgemäß ist ein Drehwerk zur Verdrehung eines ersten Bauteils einer Windenergieanlage gegenüber einem zweiten Bauteil der Windenergieanlage, wobei das erste Bauteil drehbar an dem zweiten Bauteil gelagert ist, umfassend ein an dem ersten Bauteil angeordnetes Zahnradelement, einen mittels einer Antriebshalterung an dem zweiten Bauteil angeordneten Antrieb mit einem Antriebsgehäuse und einem Antriebsritzel zur Betätigung des Zahnradelementes, ein an dem Antriebsgehäuse angeordnetes Verbindungselement, das zur Ausbildung einer lösbaren Verbindung zwischen dem Antriebsgehäuse und der Antriebshalterung ausgeführt ist, mit dem Verbindungselement zusammenwirkende Befestigungsmittel, die zwischen einer Klemmstellung und einer Freigabestellung betätigbar sind, wobei die Befestigungsmittel das Antriebsgehäuse in der Klemmstellung kraftschlüssig mit der Antriebshalterung verbinden, und wobei das Antriebsgehäuse in der Freigabestellung insbesondere stufenlos in eine Einstellrichtung an der Antriebshalterung verschiebbar ist, derart, dass durch die Verschiebung ein Zahnflankenspiel zwischen dem Antriebsritzel und dem Zahnradelement einstellbar ist, wobei das Antriebsgehäuse in der Freigabestellung durch die Drehung mindestens eines mit dem Verbindungselement koppelbaren oder gekoppelten Exzenterbolzens gegenüber dem Zahnradelement verschiebbar ist. Es versteht sich, dass die Bauteile unter anderem unmittelbar aneinander oder durch Distanzelemente beabstandet zueinander drehbar gelagert sein können.

Die Befestigung des Antriebs an einem Bauteil einer Windenergieanlage erfolgt insbesondere über eine Antriebshalterung bzw. eine Antriebskonsole oder einen Antriebstisch. In einer einfachen Ausgestaltung ist die Antriebshalterung L-förmig, wobei ein erster Schenkel an dem Bauteil der Windenergieanlage befestigt ist und der zweite Schenkel den Antrieb trägt. Die Antriebshalterung kann fest oder lösbar an dem den Antrieb tragenden Bauteil der Windenergieanlage befestigt sein. Insbesondere kann die Antriebshalterung einstückig mit dem Bauteil der Windenergieanlage ausgeführt sein.

Bei der vorliegenden Erfindung hat sich überraschend gezeigt, dass für die Befestigung des Drehwerkantriebs an einem Bauteil der Windenergieanlage auf einen passgenauen Sitz des Antriebsgehäuses in einem Rezess einer Antriebshalterung verzichtet werden kann. Für einen sicheren Halt des Antriebs genügt es stattdessen, den Antrieb mittels eines Befestigungsflansches kraftschlüssig an der Antriebshalterung zu befestigen. Dies hat einerseits den Vorteil, dass keine präzisen Rezesse bzw. Aussparungen in der Antriebshalterung vorzusehen sind und dass eine Positionierung des Antriebs gegenüber einem Zahnkranz, beispielsweise für die Einstellung des Zahnflankenspiels, sehr einfach durchgeführt werden kann.

Bei der Erfindung kann vorgesehen sein, das Antriebsgehäuse mit dem Antrieb vollständig an einer Seite eines z.B. plattenförmigen Schenkel einer Antriebshalterung zu befestigen. Denkbar ist auch, einen Rezess zu verwenden, in dem das Antriebsgehäuse zumindest bereichsweise frei beweglich ist. In der Ebene der Antriebshalterung im Bereich des Aufnahmerezesses für den Antrieb ist der größte Durchmesser des Antriebsgehäuses dazu bevorzugt kleiner als der kleinste Durchmesser der Rezessöffnung. In beiden Varianten kann der Antrieb mit Hilfe konstruktiv einfach herzustellender Verschiebemechanismen schnell und mit wenig Kraftaufwand an der Antriebshalterung verschoben werden. Dies hat wiederum zum Vorteil, dass ein Zahnflankenspiel zwischen einem Antriebsritzel des Antriebs und einem Zahnradelement des erfindungsgemäßen Drehwerks einfach und schnell einstellbar ist.

Als Zahnflankenspiel wird insbesondere das Spiel zwischen der Verzahnung des Antriebsritzels und der Verzahnung des Zahnradelements verstanden, das bei einer Umkehrung der Drehrichtung überwunden werden muss. Eine Reduzierung des Zahnflankenspiels wird durch die Vergrößerung der Eingreiftiefe einer Verzahnung des Antriebsritzels in die Verzahnung des Zahnradelementes erreicht.

Da bei der Erfindung kein Rezess zur Führung des Antriebes erforderlich ist, können Teile des Antriebes vorteilhaft lackiert werden und gut gegen Korrosion geschützt werden.

Durch den Wegfall eines passgenauen Rezesses entfällt die sonst notwendige genaue Anpassung der Rezessöffnung an die Abmessungen des Antriebsgehäuses. Zudem können bei Verzicht auf einen passgenauen Rezess ohne Weiteres Antriebsgehäuse mit unregelmäßiger Gehäuseform bzw. kantiger Umfangsform verwendet werden.

Im Gegensatz zum Stand der Technik der eingangs beschriebenen Art müssen die Befestigungsmittel, die bevorzugt als Befestigungsschrauben ausgebildet sind, nicht vollständig von dem Antriebsgehäuse entfernt werden, um den Antrieb an der Antriebshalterung zu verschieben. Es reicht vielmehr aus, die Befestigungsbolzen bzw. auf die Bolzen aufgeschraubte Muttern nur soweit zu lösen, bis die für die kraftschlüssige Verbindung zwischen dem Antriebsgehäuse und der Antriebshalterung erforderliche Vorspannung in den Befestigungsmitteln aufgehoben ist.

Eine stufenlose Verschiebung ohne Entfernung der Befestigungsbolzen wird beispielsweise dadurch ermöglicht, dass der Bolzenschaft der Bolzen schmaler ausgeführt ist als der Durchmesser der für die Bolzen vorgesehenen Durchgangsbohrungen in dem Verbindungselement des Antriebsgehäuses. Bevorzugt werden die Befestigungsbolzen zur Befestigung des Antriebsgehäuses in Gewindebohrungen der Antriebshalterung geschraubt. Dieser Ausgestaltung entsprechend ist auch denkbar, dass die Befestigungsbolzen durch Durchgangsbohrungen an der Antriebshalterung gesteckt und in Gewindebohrungen des Verbindungselements des Antriebsgehäuses geschraubt werden.

Alternativ kann vorgesehen sein, dass am Verbindungselement des Antriebsgehäuses und an der Antriebshalterung zueinander passend ausgerichtete Durchgangsbohrungen vorgesehen sind, durch die Befestigungsbolzen gesteckt und endseitig mit Schraubmuttern verschraubt werden, um den Antrieb an der Antriebshalterung zu befestigen. In letztgenannter Ausführungsform kann auch vorgesehen sein, dass zumindest einige Durchgangsbohrungen entweder an dem Verbindungselement des Antriebsgehäuses oder an der Antriebshalterung passgenau zum Schraubbolzenschaft ausgeführt sind. Die genannten Arten der Verschraubung und insbesondere die Herstellung einer kraftschlüssigen Verbindung sind hinlänglich bekannt.

Das erfindungsgemäße Verbindungselement an dem Antriebsgehäuse kann z.B. ein am Umfang des Antriebsgehäuses umlaufendes kragenartiges Flanschprofil sein. Verbindungselemente mit anderer Profilgebung sind natürlich auch denkbar. Beispielsweise könnte das Verbindungselement aus einem oder aus mehreren Winkelprofilen gebildet sein, wobei ein erster Schenkel des Profils an dem Antriebsgehäuse und der andere Schenkel des Profils an der Antriebshalterung befestigt ist.

Als Zahnradelement wird sowohl ein geschlossener Zahnkranz als auch ein Segment eines Zahnkranzes verstanden. Bei einer Verdrehung zweier Bauteile einer Windenergieanlage kann zum Beispiel vorgesehen sein, dass eine Drehung nur über einen bestimmten Winkel durchführbar sein soll, wobei nur dieser Winkelbereich durch ein Zahnkranzsegment abgedeckt werden muss. Damit kann Gewicht und Material eingespart werden. Zahnkranzsegmente haben im Übrigen den Vorteil, dass sie deutlich einfacher zu handhaben, zu montieren und auszutauschen sind.

Eine einfache und schnelle Verschiebung des Antriebs an der Antriebshalterung wird durch die erfindungsgemäße Verwendung eines Exzenterbolzens erzielt. Dazu ist der Exzenterbolzen derart mit der Antriebshalterung und dem Verbindungselement des Antriebsgehäuses gekoppelt, dass eine Drehung des Exzenterbolzens eine Verschiebung des Antriebselementes gegenüber der Antriebshalterung bewirkt. Der Schaft des Exzenterbolzens ist bevorzugt passgenau in einer Bohrung des Verbindungselements gelagert. Ein exzentrisch und achsparallel zur Schaftachse an dem Exzenterbolzen angeordnetes Drehlager dient zur Abstützung an der Antriebshalterung. Bevorzugt wird der Exzenterbolzen in eine für einen Befestigungsbolzen vorgesehene Bohrung eingesteckt. Das Drehlager am Exzenterbolzen kann z.B. eine eingepresste oder eingeschraubte Achse oder ein exzentrisch angeformter Zapfen sein.

Der Exzenterbolzen kann fest mit dem Verbindungselement und/oder der Antriebshalterung verbunden sein. Alternativ kann der Exzenterbolzen in Art eines Werkzeugs lösbar mit dem Verbindungselement und/oder der Antriebshalterung verbunden sein. Bei der Ausführung als Werkzeug wird der Exzenterbolzen im Bedarfsfall zum Beispiel in eine speziell dafür vorgesehene Bohrung eingesetzt oder zumindest zeitweise gegen einen Befestigungsbolzen ausgetauscht.

Ein wesentlicher Vorteil der Erfindung ist, dass der Exzenterbolzen einen sehr geringen Durchmesser gegenüber dem Antriebsgehäuse aufweist und somit eine geringe Reibung erzeugt und leicht zu drehen ist. Außerdem wird die Ausrichtung von Ölablässen, Klemmkästen und Winkelantrieben durch eine annähernd geradlinige Verschiebung des Antriebs vereinfacht, so dass beispielsweise eine Neuausrichtung nach der Einstellung des Zahnflankenspiels entfällt.

In einer bevorzugten Ausgestaltung ist das erste Bauteil eine Rotornabe und das zweite Bauteil ein Rotorblatt. Alternativ ist das erste Bauteil ein Turm und das zweite Bauteil ist ein Maschinenträger mit einer Gondel. Denkbar ist auch, dass das zweite Bauteil eine Rotornabe und das erstes Bauteil ein Rotorblatt ist oder dass das zweite Bauteil ein Turm und das erste Bauteil ein Maschinenträger mit einer Gondel ist. Die Gondel ist ein Strukturbauteil der Windenergieanlage und dient unter anderem der Behausung des Getriebes und des Generators der Windenergieanlage. Die Gondel wird auch als Maschinenhaus bezeichnet und ist üblicherweise an einem Maschinenträger montiert, der auch das Getriebe und den Generator der Windenergieanlage haltert.

Das erfindungsgemäße Drehwerk kann in verschiedenen Varianten an der Windenergieanlage angeordnet sein. Wie erwähnt, kann das Zahnradelement als geschlossener Zahnkranz oder als Zahnradsegment ausgebildet sein. Bevorzugt hat das Zahnradelement eine Innenverzahnung nach Art eines Hohlrads, wobei das Antriebsritzel so zu dem Zahnradelement positioniert ist, dass die Verzahnung des Antriebsritzels in die Verzahnung des Zahnkranzes eingreift. Denkbar ist natürlich auch, dass das Zahnradelement mit einer Außenverzahnung ausgeführt ist.

Üblicherweise ist das Zahnradelement direkt oder über eine Halterung an einem ersten Bauteil angeordnet und der Antrieb ist direkt oder über eine Halterung an einem zweiten Bauteil der Windenergieanlage angeordnet. Sofern die zu verdrehenden Bauteile der Windenergieanlage durch eine Distanzhülse oder dergleichen voneinander beabstandet sind, kann auch vorgesehen sein, dass das Zahnradelement oder der Antrieb an der Distanzhülse befestigt ist. Bei einigen Windenergieanlagen ist z.B. das Rotorblatt mittels einer Distanzhülse an der Rotornabe gelagert.

Beispielsweise kann das Zahnradelement an einem Turm der Windenergieanlage angeordnet sein und der Antrieb kann an einem drehbar an dem Turm gelagerten Bereich der Gondel bzw. des die Gondel tragenden Maschinenträgers befestigt sein. Hierbei dreht sich der Antrieb bei der Drehung des Antriebsritzels gegenüber dem Zahnradelement. Bei einer umgekehrten Anordnung dreht sich das Zahnradelement gegenüber dem Antrieb. Entsprechendes kann für die Anordnung zwischen Rotornabe und Rotorblatt vorgesehen sein.

Weiter bevorzugt ist das Antriebsgehäuse in mehrere, eine Einstellebene aufspannende Einstellrichtungen verschiebbar, wobei zumindest einige der Befestigungsmittel in der Freigabestellung eine Verschiebung des Antriebsgehäuses senkrecht zur Einstellebene begrenzen. Eine Begrenzung der Verschiebung des Antriebsgehäuses senkrecht zur Einstellebene ist insbesondere von Vorteil, wenn der Antrieb hängend montiert ist. Bei der Einstellung des Zahnflankenspiels muss der Antrieb nicht zusätzlich gegen Herabfallen gesichert werden. Die Absicherung kann zumindest unterstützend von den Befestigungsmitteln übernommen werden.

In einer weiteren Ausgestaltung der Erfindung ist der Exzenterbolzen drehbar an dem zweiten Bauteil anlenkbar. Insbesondere ist daran gedacht, dass an einem Ende des Exzenterbolzens ein exzentrisch angeordneter Zapfen vorgesehen ist, der sich in einer Bohrung am zweiten Bauteil bzw. an der Antriebshalterung drehbar abstützt. Alternativ kann eine Achse vorgesehen sein, die drehbar mit dem Exzenterbolzen koppelbar ist. Die Achse kann zum Beispiel ein Bolzen oder ein Stift sein, der sich in einer Bohrung an dem zweiten Bauteil bzw. an der Antriebshalterung abstützt. Die Achse kann insbesondere mit dem zweiten Bauteil bzw. der Antriebshalterung verpresst, verschraubt oder dort angeformt sein. Zur Verwendung des Exzenterbolzens wird dieser auf die Achse aufgesteckt.

In einer Ausgestaltung weist der Exzenterbolzen ein Betätigungselement auf, mittels dem der Exzenterbolzen insbesondere unter Ausnutzung eines Hebeleffekts um seine Drehachse drehbar ist. In einer einfachen Variante kann zum Beispiel ein Hebel einstückig mit dem Exzenterbolzen verbunden sein, so dass bei der Betätigung des Hebels der Exzenterbolzen in Drehung versetzt wird und somit für eine Verschiebung des Antriebsgehäuses sorgt. Es ist alternativ oder zusätzlich auch daran gedacht, dass der Exzenterbolzen einen Schraubkopf oder dergleichen aufweist, mit dem der Exzenterbolzen unter Einsatz eines Werkzeuges drehbar ist. Statt eines Schraubkopfes ist ohne Weiteres auch eine profilierte Vertiefung, wie zum Beispiel eine Innensechskantbohrung, an dem Exzenterbolzen denkbar.

In einer bevorzugten Ausgestaltung ist das Antriebsgehäuse bei der Verschiebung an der Antriebshalterung durch mindestens ein Führungselement zwangsgeführt. Es ist z.B. daran gedacht, dass ein Führungselement in Form eines Führungsbolzens bzw. eines Führungsnippels an der Antriebshalterung befestigt ist und in eine Führungsbahn an dem Verbindungelement eingreift. Die Führungsbahn ist bevorzugt als Langloch bzw. Längsnut ausgebildet. Das Führungselement ist bevorzugt einstückig an der Antriebshalterung angeformt. Das Führungselement kann an die Halterung angeschweißt oder dort eingeschraubt oder einpresst sein. Denkbar ist ohne Weiteres, dass das Führungselement an dem Verbindungselement und die Führungsbahn an der Antriebshalterung in der beschriebenen Art angeordnet ist. Bevorzugt ist der Exzenterbolzen ein Führungselement. Insbesondere ist daran gedacht, dass das Antriebsgehäuse durch den Exzenterbolzen und durch mindestens ein weiteres Führungselement zwangsgeführt ist.

In einer bevorzugten Ausgestaltung sind die Drehachse des Exzenterbolzens und mindestens ein Führungselement entlang einer die Drehachse des Zahnradelements schneidenden Geraden positioniert. Diese Anordnung hat den Vorteil, dass eine Drehbewegung des Exzenterbolzens sehr effizient in eine Verschiebung des Antriebsritzels umgesetzt wird. Bevorzugt sind also die Drehachse des Exzenterbolzens und ein Führungselement in Flucht mit der Drehachse des Zahnradelements angeordnet.

Bevorzugt ist das Antriebsgehäuse derart geführt, dass eine Drehbewegung des Exzenterbolzens zumindest bereichsweise in eine etwa gradlinige Bewegung des Antriebsgehäuses umgesetzt wird. Besonders bevorzugt sind dafür der Exzenterbolzen und mindestens ein Führungselement entlang einer die Drehachse des Zahnradelements schneidenden Geraden positioniert, wobei das Antriebsgehäuse des Antriebs ebenfalls auf dieser Geraden positioniert ist. Weiter bevorzugt ist das Antriebsgehäuse zwischen dem Exzenterbolzen und dem Führungselement positioniert. Es hat sich gezeigt, dass bei einer besonders praktischen Umsetzung das Führungselement auf der dem Zahnradelement zugewandten Seite des Antriebs und der Exzenterbolzen auf der dem Zahnrad abgewandten Seite des Antriebs angeordnet ist.

Erfindungsgemäß ist auch ein Verfahren zur Verschiebung eines Antriebs eines erfindungsgemäßen Drehwerks, mit den Schritten: Betätigen der Befestigungsmittel in die Freigabestellung zum Lösen der kraftschlüssigen Verbindung zwischen dem Antriebsgehäuse und der Antriebshalterung, Drehen des Exzenterbolzens zur Verschiebung des Antriebsgehäuses, an der Antriebshalterung, Betätigen der Befestigungsmittel in die Klemmstellung zum Herstellen einer kraftschlüssigen Verbindung zwischen dem Antriebsgehäuse und der Antriebshalterung. Es ist daran gedacht, das Verfahren mit einem Drehwerk mit den körperlichen Merkmalen des Anspruchs 1 auszuführen. Die Ausführungen zu den vorteilhaften Ausgestaltungen des Drehwerks ergeben bevorzugte Varianten des erfindungsgemäßen Verfahrens.

In einer Ausgestaltung des erfindungsgemäßen Verfahrens ist daran gedacht, dass das Verfahren eine Auswahl der folgenden Schritte umfasst: Koppeln des Exzenterbolzens mit dem Verbindungselement derart, dass eine Drehung des Exzenterbolzens zu einer Verschiebung des Antriebsgehäuses gegenüber dem Zahnradelement führt; Entkoppeln des Exzenterbolzens von dem Verbindungselement. Bevorzugt ist vorgesehen, dass das Koppeln des Exzenterbolzens zeitlich vor der Betätigung der Befestigungsmittel in die Freigabestellung durchgeführt wird. Ebenfalls bevorzugt ist das Entkoppeln des Exzenterbolzens zeitlich nach der Betätigung der Befestigungsmittel in die Klemmstellung eingeordnet.

Bei einem Drehwerk mit einem permanent mit dem Verbindungselement gekoppelten Exzenterbolzen entfällt der Schritt: Koppeln des Exzenterbolzens mit dem Verbindungselement derart, dass eine Drehung des Exzenterbolzens zu einer Verschiebung des Antriebsgehäuses gegenüber dem Zahnradelement führt und der Schritt: Entkoppeln des Exzenterbolzens. Bei einer permanenten Kopplung ist vorgesehen, dass der Exzenterbolzen dauerhaft an dem Verbindungselement angeordnet ist. Es kann auch vorgesehen sein, dass der Exzenterbolzen permanent an der Antriebshalterung angeordnet ist. Die Kopplung des Exzenterbolzens ist dabei hergestellt, wenn der Antrieb mit dem Verbindungselement in seiner Betriebsposition an die Antriebshalterung angeordnet ist. Die Betätigung der Verbindungsmittel und/oder die Drehung des Exzenterbolzens kann mit einem Werkzeug, insbesondere mit einem Schraubenschlüssel, einem motorbetriebenen Schraubwerkzeug oder dergleichen durchgeführt werden.

Erfindungsgemäß kann auch ein Drehwerk mit den Merkmalen des Oberbegriffs des Anspruchs 1 sein, bei dem das Antriebsgehäuse durch die Betätigung mindestens eines Verstellelements gegenüber dem Zahnradelement verschiebbar ist, wobei das Antriebsgehäuse bei der Verschiebung eine ausschließlich translatorische Bewegung gegenüber dem Zahnradelement ausführt. Abgesehen von der Verwendung eines Exzenterbolzens sind die technischen Ausführungen zum erstgenannten Drehwerk entsprechend auf dieses Drehwerk übertragbar.

Bei diesem Drehwerk besteht der Vorteil darin, dass der gesamte Antrieb gradlinig in Bezug auf das Zahnradelement verschoben werden kann. Die ausschließlich gradlinige Verschiebung hat den Vorteil, dass Anschlussleitungen und/oder Versorgungsleitungen für den Antrieb nicht besonders flexibel sein müssen. Anders als im Stand der Technik üblich, findet keine wie auch immer geartete Drehung des Antriebsgehäuses statt, womit eine konstruktiv vereinfachte Führung von Versorgungs- und/oder Steuerleitungen ermöglicht wird.

Es kann vorgesehen sein, dass das Verstellelement einen Gewindestab mit einem Außengewinde umfasst, wobei das Außengewinde zur Verschiebung des Antriebsgehäuses in ein ortsfest am zweiten Bauteil angeordnetes Innengewinde eingreift.

Erfindungsgemäß ist auch eine Windenergieanlage mit einem erfindungsgemäßen Drehwerk. Die Vorteile der erfindungsgemäßen Windenergieanlage ergeben sich aus den Vorzügen des Drehwerks.

Ausführungsbeispiele der Erfindung werden in den nachfolgenden Figuren angegeben. Es zeigen:
- Fig. 1: eine schematische Abbildung einer Windenergieanlage von der Seite;
- Fig. 2: eine Prinzipskizze eines Zahnrads und eines Antriebsritzels;
- Fig. 3: eine schematische Abbildung eines bekannten Drehwerkantriebs an einer Antriebshalterung in der Draufsicht;
- Fig. 4: eine Schnittdarstellung des bekannten Antriebs aus Fig. 3;
- Fig. 5: eine schematische Abbildung eines bekannten Drehwerkantriebs an einer Antriebshalterung in der Draufsicht;
- Fig. 6: eine Schnittdarstellung des Antriebs aus Fig. 5;
- Fig. 7: eine schematische Darstellung eines erfindungsgemäßen Drehwerkantriebs an einer Antriebshalterung in Draufsicht;
- Fig. 8: eine Schnittdarstellung des erfindungsgemäßen Antriebs aus Fig. 7;
- Fig. 9: eine Schnittdarstellung eines in einen Befestigungsflansch eingesetzten erfindungsgemäßen Exzenterbolzens;
- Fig. 10: die Anordnung des erfindungsgemäßen Exzenterbolzens aus Fig. 9 in der Draufsicht;
- Fig. 11: eine schematische Darstellung eines Befestigungsflansches eines Drehantriebs in einer erfindungsgemäßen Ausführung, und
- Fig. 12: eine schematische Darstellung eines Drehantriebs an einer Antriebshalterung in einer weiteren Variante.

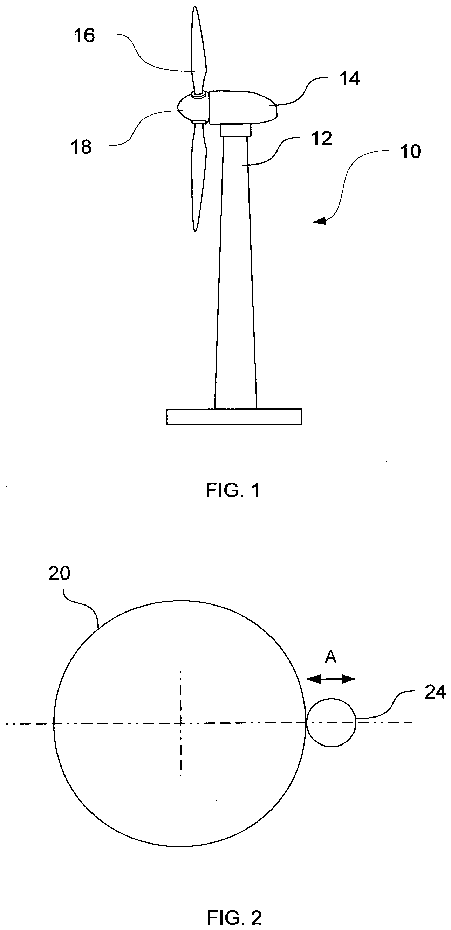

Fig. 1 zeigt eine schematische Ansicht einer Windenergieanlage. Ein erfindungsgemäßes Drehwerk wird beispielsweise zur Verdrehung eines Rotorblattes 16 gegenüber einer Rotornabe 18 eingesetzt. Bei dieser Relativbewegung kann die Pitcheinstellung des Rotorblattes 16 verändert werden. Ein erfindungsgemäßes Drehwerk kann ebenso für die Verdrehung einer Anlagengondel 14 gegenüber dem Anlagenturm 12 eingesetzt werden. Mit der Verdrehung der Gondel 14 wird die Azimuteinstellung der Windenergieanlage 10 verändert.

Fig. 2 zeigt eine Prinzipskizze eines Zahnkranzes 20 und ein mit dem Zahnkranz 20 zusammenwirkendes Antriebsritzel 24. Zur Einstellung eines Zahnflankenspiels zwischen dem Zahnkranz 20 und dem Ritzel 24, wird das Ritzel 24 in eine der mit A gekennzeichneten Richtungen gegenüber dem Zahnkranz verschoben.

Die Fig. 3 und 4 zeigen den prinzipiellen Aufbau eines bekannten Drehwerkantriebs 22. Fig. 3 ist eine Draufsicht auf einen Drehwerkantrieb 22 in seiner axialen Richtung. In der Perspektive der Fig. 3 ist das gestrichelt dargestellte Antriebsritzel 24 von dem Gehäuse des Antriebs 22 verdeckt. Der Drehwerkantrieb 22 ist in einem Rezess 34 einer Antriebshalterung 32 passgenau eingesetzt. Wie auch in den Fig. 5 - 8, wird der Antrieb 22 üblicherweise mit dem Antriebsritzel 24 voran in den Rezess 34, 40 eingesteckt. Antriebsritzel 24 und Befestigungsflansch sind somit auf verschiedenen Seiten der Antriebshalterung 32 positioniert. Mittels eines Befestigungsflansches 28 ist das Gehäuse 26 des Antriebes 22 an der Antriebshalterung 32 befestigt. Zur Befestigung dienen Schraubbolzen 30. Wie in Fig. 3 und Fig. 4 erkennbar, ist das Antriebsritzel 24 exzentrisch zu dem Antriebsgehäuse 26 an dem Antrieb 22 angeordnet. Zur Verdeutlichung sind in dieser und den nachfolgenden Darstellungen die Exzentrizitäten stark übertrieben dargestellt.

Zur Einstellung des Zahnflankenspiels zwischen dem in Fig. 2 dargestellten Zahnkranz 20 und dem Antriebsritzel 24 werden zunächst die Befestigungsbolzen 30 gelöst und von dem Befestigungsflansch 28 entfernt, so dass eine Drehung des Antriebsgehäuses 26 in dem Rezess 34 der Antriebshalterung 32 möglich ist. Bei der Drehung des Antriebes 22 in eine der Richtungen B verändert sich der Abstand des Antriebsritzels 24 zu dem Zahnkranz 20 (vgl. Fig. 2). Die Relativbewegung des Antriebsritzels 24 ist in Fig. 4 bei A angedeutet. Eine Verschiebung in eine der Richtungen A wird dadurch erzielt, dass das Antriebsritzel 24 bei der Drehung des Antriebs 22 in eine der Richtungen B auf einer Kreisbahn um die Längsachse des Antriebes 22 bewegt wird. Bei dem Überstreichen dieser Kreisbahn verringert bzw. vergrößert sich der Abstand des Antriebsritzels 24 gegenüber dem Zahnkranz 20 (vgl. Fig. 2).

Wie insbesondere in Fig. 4 zu erkennen ist, wird bei dieser bekannten Variante das Antriebsgehäuse 26 passgenau in den Rezess 34 der Antriebshalterung 32 eingesetzt. Die von dem Antriebsritzel 24 aufgenommenen Kräfte, die bei dem Zusammenspiel von Antriebsritzel 24 und Zahnkranz 20 entstehen, werden durch den passgenauen Sitz des Antriebsgehäuses 26 in dem Rezess 34 durch die Antriebshalterung 32 aufgenommen und kompensiert.

Fig. 5 und 6 zeigen eine zweite Variante einer bekannten Anordnung für einen Drehwerkantrieb 22 in einer Antriebshalterung 32. Fig. 5 ist eine Draufsicht auf den Drehwerkantrieb 22 in seiner axialen Richtung. In der Perspektive der Fig. 5 ist das gestrichelt dargestellte Antriebsritzel 24 von dem Gehäuse des Antriebs 22 verdeckt. Im Unterschied zur Variante aus Fig. 3 und 4 ist der Antrieb 22 nicht direkt in einem Rezess 34 der Antriebshalterung 32 gehaltert, sondern befindet sich passgenau in einem Rezess 40 eines Exzentertopfes 36. Der Exzentertopf 36 ist seinerseits passgenau in dem Rezess 34 der Antriebshalterung 32 eingesetzt. Über erste Befestigungsbolzen 30 ist der Antrieb 22 mit einem Befestigungsflansch 28 des Antriebsgehäuses 26 in dem Rezess 40 des Exzentertopfes 36 befestigt. Der Exzentertopf 36 weist seinerseits einen Befestigungsflansch 38 auf, mittels dem der Exzentertopf 36 mit zweiten Befestigungsbolzen 30 an der Antriebshalterung 32 befestigt ist. Der Rezess 40 ist exzentrisch im Exzentertopf 36 angeordnet. Diese Variante hat gegenüber der Variante aus den Fig. 3 und 4 den Vorteil, dass ein Antrieb genutzt werden kann, der eine zentrisch angeordnete Antriebswelle und/oder ein zentrisch angeordnetes Antriebsritzel 24 aufweist. Antriebe mit einer zentrischen Anordnung der Antriebswelle sind einfacher herzustellen und kostengünstiger. Um eine Verschiebung des Antriebsritzels 24 zu erreichen, werden die Befestigungsbolzen 30, die den Exzentertopf 36 an der Antriebshalterung 32 befestigen, gelöst und aus dem Befestigungsflansch 38 entfernt. Der Exzentertopf 36 kann dann in dem Rezess 34 der Antriebshalterung 32 in eine der Richtungen B gedreht werden. Bei der Bewegung des Exzentertopfes 36 in eine der Richtungen B beschreibt das Antriebsritzel 24 des Antriebes 22 eine Kreisbahn um den Mittelpunkt des Exzentertopfes 36. Bei der Drehung des Exzentertopfes 36 wird das Antriebsritzel 24 gegenüber dem Zahnkranz 20 (vgl. Fig. 2) in eine der Richtungen A verschoben. Bei den real sehr geringen erforderlichen Exzentrizitäten sind anstatt der ersten und zweiten Befestigungsbolzen 30 häufig nur ein Satz von Befestigungsbolzen zur Verschraubung von Antrieb 22, Exzentertopf 36 und Antriebshalterung 32 in einer Verbindung vorgesehen.

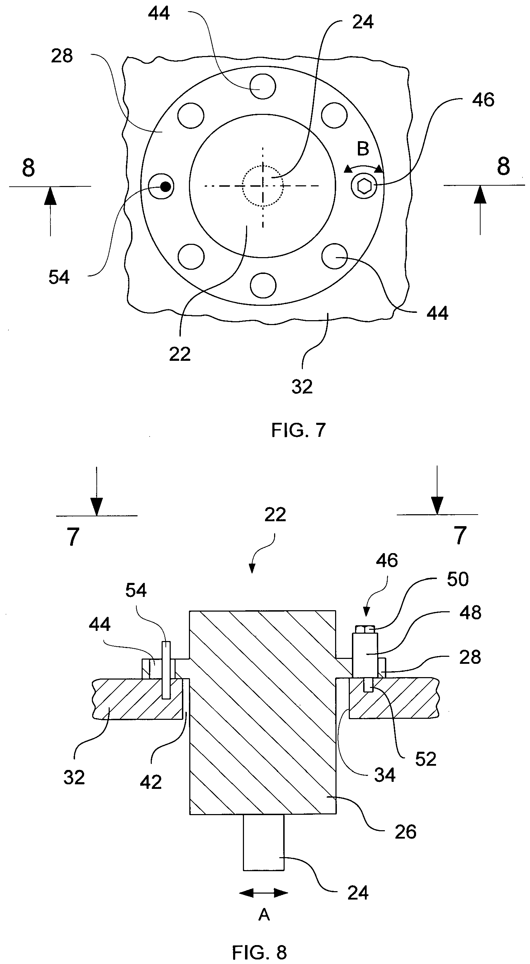

Fig. 7 und 8 zeigen eine schematische Darstellung eines erfindungsgemäßen Drehwerkantriebs 22 in einer Draufsicht und in einer Schnittdarstellung. Fig. 7 ist eine Draufsicht auf den Drehwerkantrieb 22 in seiner axialen Richtung. In der Perspektive der Fig. 7 ist das gestrichelt dargestellte Antriebsritzel 24 von dem Gehäuse des Antriebs 22 verdeckt. Erfindungsgemäß ist an dem Antrieb 22 ein Exzenterbolzen 46 angeordnet. Der Exzenterbolzen 46 ist in eine der am Befestigungsflansch 28 angeordneten Bohrungen 44 eingesteckt. Dem Exzenterbolzen 46 am Befestigungsflansch 28 gegenüberliegend ist ein als Rundstab ausgebildetes Führungselement 54 angedeutet, das unter anderem zur Führung des Antriebsgehäuses 26 bei der Verschiebung entlang der Antriebshalterung 32 dient. Bevorzugt ist das Führungselement 54 in die Antriebshalterung 32 eingeschraubt bzw. eingesteckt. Beim Sitz des Antriebs 22 an der Antriebshalterung 32 ragt das Führungselement 54 durch eine Bohrung 44 und begrenzt so den Bewegungsweg des Antriebs 22. Bevorzugt kann die Bohrung 44 im Bereich des Führungselements 54 auch als Langloch ausgeführt sein (nicht dargestellt).

Die Führungselemente 54 sind vorzugsweise als Schraubbolzen ausgebildet. Als Schraubbolzen ausgebildete Führungselemente 54 können eine Doppelfunktion erfüllen. Einerseits können sie der Führung des Antriebs 22 dienen und andererseits kann damit eine kraftschlüssige Verbindung des Befestigungsflansches 28 bzw. des Antriebsgehäuses 26 mit der Antriebshalterung 32 hergestellt werden. Die Führungselemente 54 können den in den Fig. 3 bis 6 gezeigten Befestigungsbolzen 30 entsprechen.

Wie in den Fig. 7 und 8 erkennbar, ist der Durchmesser des Führungselements 54 kleiner als der Durchmesser der Bohrungen 44. Dadurch ist eine Verschiebung des Antriebs 22 entlang einer Oberfläche bzw. relativ zu der Antriebshalterung 32 möglich, ohne die Elemente 54 aus der Antriebshalterung 32 bzw. von dem Befestigungsflansch 28 zu entfernen.

Die Verschiebung des Antriebs 22 und damit des Antriebsritzels 24 wird durch die Drehung des Exzenterbolzens 46 in eine der Richtungen B erreicht. Bei der Drehung des Exzenterbolzens 46 wird das Antriebsgehäuse 26 zwangsgeführt an der Antriebshalterung 32 verschoben. In dem dargestellten Ausführungsbeispiel ist das Antriebsgehäuse 26 in einen Rezess 34 der Antriebshalterung 32 gesteckt. Zwischen dem Öffnungsrand des Rezesses 34 und dem Antriebsgehäuse 26 befindet sich ein Spalt 42. Der Spalt 42 und das Spiel des Führungselementes 54 in der Bohrung 44 ermöglicht eine Verschiebung des gesamten Antriebsgehäuses 26 in dem Rezess der Antriebshalterung 32.

Zur Betätigung des Exzenterbolzens 46 ist an seinem, den Antrieb 22 haltenden Ende ein Schraubkopf 50 angeordnet. Der Schraubkopf 50 kann z.B. mit einem Schraubenschlüssel oder dergleichen und Ausnutzung eines Hebeleffektes betätigt werden.

Wie in der Fig. 8 verdeutlicht, sitzt die Exzentrizität 48 des Exzenterbolzens 46 passgenau in einer Bohrung des Befestigungsflansches 28. Diese Bohrung kann z.B. eine für Befestigungsmittel vorgesehene Durchgangsbohrung 44 sein.

Bei der Drehung des Exzenterbolzens 46 wird die Exzentrizität 48 um eine Exzenterachse 52 gedreht. Die Achse kann ein in die Antriebshalterung 32 eingeschraubter oder eingesteckter bzw. eingepresster Stab sein. Die Exzenterachse 52 kann bevorzugt auch eine drehfest mit dem Exzenterbolzen 46 ausgeführte Welle sein, die in einer Bohrung in der Antriebshalterung 32 geführt ist.

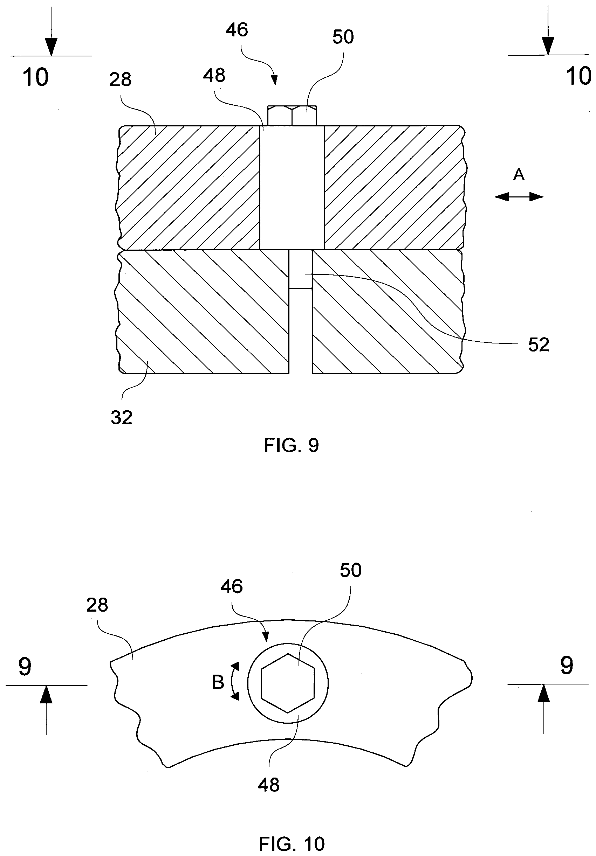

Die Fig. 9 und 10 zeigen eine Schnittdarstellung und eine Draufsicht des erfindungsgemäßen Exzenterbolzens 46 in einer Detailansicht. Fig. 9 zeigt insbesondere einen passgenauen Sitz des Exzenterbolzens 46 in dem Befestigungsflansch 28 und den Eingriff der Exzenterachse 52 in eine Durchgangsbohrung an der Antriebshalterung 32.

Bei der Drehung des Exzenterbolzens 46 bewegt sich der Befestigungsflansch 28 gegenüber der Antriebshalterung 32 in eine der Richtungen A.

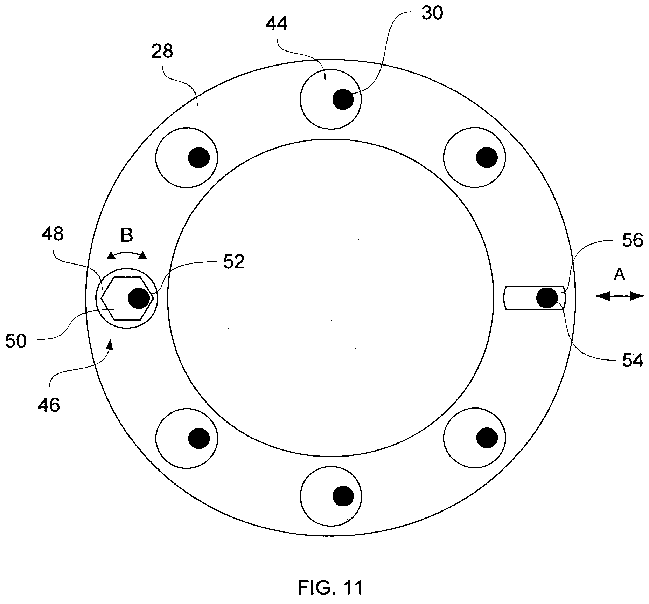

Fig. 11 zeigt eine schematische Darstellung des Befestigungsflansches 28 in einer bevorzugten Variante. Im Unterschied zu Fig. 7 ist in dem Befestigungsflansch 28 ein Langloch 56 ausgebildet. Das Langloch 56 befindet sich gegenüberliegend zum Exzenterbolzen 46. Ein an der Antriebshalterung 32 (nicht dargestellt) befestigtes Führungselement 54 ist in das Langloch 56 eingesteckt. Bei der Verschiebung des Antriebs 22 an der Antriebshalterung 32 ist der Antrieb 22 durch das Führungselement 54 in dem Langloch 56 zwangsgeführt. Dadurch kann eine Drehbewegung des Exzenterbolzens 46 an einer ersten Seite des Befestigungsflansches 28 in eine etwa gradlinige Bewegung des Antriebsgehäuses 26 an der gegenüberliegenden Seite des Befestigungsflansches 28 umgesetzt werden. Denkbar ist auch, dass das Langloch 56 an der Antriebshalterung 32 angeordnet ist, und ein an dem Befestigungsflansch 28 angeordnetes Führungselement 54 in das Langloch 56 eingreift (nicht dargestellt). Wie zu Fig. 7 erwähnt, kann das Führungselement 54 als Befestigungsbolzen ausgebildet sein.

In Fig. 11 sind in den Bohrungen 44 Befestigungsbolzen 30 gezeigt. Die Befestigungsbolzen 30 sind ohne Schraubkopf bzw. Schraubmutter abgebildet, um das Spiel der Bolzen innerhalb der Bohrungen 44 zu zeigen.

Rein schematisch ist an dem Schraubkopf 50 des Exzenterbolzens 46 die Exzenterachse 52 dargestellt, um die der Exzenterbolzen 46 drehbar ist. Vorzugsweise und unabhängig vom vorliegenden Ausführungsbeispiel ist die Drehachse 52 des Exzenterbolzens 46 mit einem Führungselement 54 in einer Flucht mit der Drehachse des Zahnradelements 20 (nicht dargestellt) an dem Befestigungsflansch 28 angeordnet. Weiter bevorzugt ist der Exzenterbolzen 46 auf der dem Zahnradelement 20 abgewandten Seite des Antriebs 22 angeordnet. Entsprechend kann der Exzenterbolzen 46 mit seiner Drehachse 52 und ein - dem Exzenterbolzen 46 gegenüberliegend an der Antriebshalterung 32 und/oder an dem Antriebsgehäuse 26 bzw. an dem Befestigungsflansch 28 angeordnetes - Führungselement 54 auf einer die Drehachse des Zahnradelements 20 schneidenden Linie positioniert sein. Dies führt zu einer besonders effizienten Umsetzung der Drehbewegung des Exzenterbolzens 46 in eine Verschiebungsbewegung des Antriebs 22 in Richtung des Zahnradelements 20. Bevorzugt ist das Antriebsgehäuse 26 in einer Linie zwischen dem Exzenterbolzen 46 und dem Führungselement 54 angeordnet.

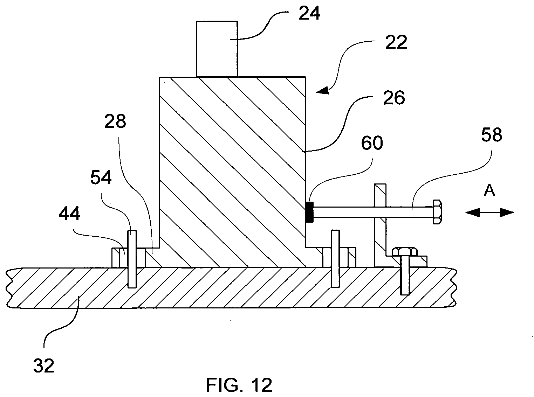

Fig. 12 zeigt einen erfindungsgemäßen Drehantrieb in einem anderen Ausführungsbeispiel. Statt des Exzenterbolzens 46 wird vorliegend ein Verstellelement 58 zur Verschiebung des Antriebs 22 an der Antriebshalterung 32 verwendet. Konstruktive Elemente, wie die Bohrungen 44, die Führungselemente 54, der Flansch 28, das Antriebsritzel 24 oder die Antriebshalterung 32, sind identisch bzw. in Anlehnung zu den Ausführungen der vorhergehenden Figuren ausgebildet. Im Unterschied zu den Figuren 3 - 8 ist das Antriebsgehäuse 26 nicht in einen Rezess der Antriebshalterung 32 gesteckt. Vorliegend ist der Antrieb 22 mit dem Antriebsgehäuse 26 vollständig auf einer Seite der Antriebshalterung 32 angeordnet. Diese Anordnung ist ohne Weiteres auch denkbar bei dem Ausführungsbeispiel der Fig. 7 und 8.

Gemäß diesem Ausführungsbeispiel dient das Verstellelement 58 der Verschiebung des Antriebs 22. Dafür weist das Verstellelement 58 einen langgestreckten Bereich mit einem Außengewinde auf, das in ein zur Antriebshalterung 32 ortsfest angeordneten Innengewinde greift (nicht dargestellt). Das Verstellelement 58 kann beispielsweise ein Schraubbolzen sein.

An dem dem Antrieb 22 abgewandten Ende weist das Verstellelement 58 einen Schraubkopf oder dergleichen auf, der mit einem Werkzeug, wie z.B. einem Schraubenschlüssel, zur Drehung des Verstellelementes 58 betätigt werden kann. An dem den Schraubkopf gegenüberliegenden Ende des Verstellelementes 58 ist ein Koppelelement 60 angeordnet, mit dem das Verstellelement 58 an das Antriebsgehäuse 26 angeschlossen ist. Mit dem Koppelelement 60 kann eine Druck-/ beziehungsweise Zugkraft des Verstellelementes 58 auf das Antriebsgehäuse 26 übertragen werden. Vorzugsweise ist das Koppelelement 60 fest mit dem Antriebsgehäuse 26 verbunden.

Alternativ oder zusätzlich kann - wie zu den Figuren 7 bis 11 beschrieben - ein Exzenterbolzen 46 in eine der Bohrungen 44 eingeführt sein, der zur Verschiebung des Antriebs 22 dient bzw. die Verschiebung unterstützt. Ein Verstellelement 58 kann zur Verschiebung bzw. zur Fixierung des Antriebs 22 an der Antriebshalterung 32 unterstützend eingesetzt werden.

**Bezugszeichenliste:**

| | | | |
|---|---|---|---|
| 10 | Windenergieanlage | 60 | Koppelelement |
| 12 | Turm | A | Verschiebungsrichtung |
| 14 | Anlagengondel | B | Drehrichtung |
| 16 | Rotorblatt | | |
| 18 | Rotornabe | | |
| 20 | Zahnkranz | | |
| 22 | Drehwerkantrieb | | |
| 24 | Antriebsritzel | | |
| 26 | Antriebsgehäuse | | |
| 28 | Befestigungsflansch des Antriebs | | |
| 30 | Befestigungsbolzen | | |
| 32 | Antriebshalterung | | |
| 34 | Rezess in der Antriebshalterung | | |
| 36 | Exzentertopf | | |
| 38 | Befestigungsflansch des Exzentertopfes | | |
| 40 | Rezess im Exzentertopf | | |
| 42 | Spalt | | |
| 44 | Flanschbohrungen | | |
| 46 | Exzenterbolzen | | |
| 48 | Exzentrizität | | |
| 50 | Schraubkopf | | |
| 52 | Drehachse des Exzenterbolzens | | |
| 54 | Führungselement | | |
| 56 | Langloch | | |
| 58 | Verstellelement | | |

## Patentansprüche

1. Drehwerk zur Verdrehung eines ersten Bauteils einer Windenergieanlage (10) gegenüber einem zweiten Bauteil der Windenergieanlage (10), wobei das erste Bauteil drehbar an dem zweiten Bauteil gelagert ist, umfassend:
ein an dem ersten Bauteil angeordnetes Zahnradelement (20),
einen mittels einer Antriebshalterung (32) an dem zweiten Bauteil angeordneten Antrieb (22) mit einem Antriebsgehäuse (26) und einem Antriebsritzel (24) zur Betätigung des Zahnradelementes (20),
ein an dem Antriebsgehäuse (26) angeordnetes Verbindungselement (28), das zur Ausbildung einer lösbaren Verbindung zwischen dem Antriebsgehäuse (26) und der Antriebshalterung (32) ausgeführt ist,
mit dem Verbindungselement (28) zusammenwirkende Befestigungsmittel (30), die zwischen einer Klemmstellung und einer Freigabestellung betätigbar sind,
wobei die Befestigungsmittel (30) das Antriebsgehäuse (26) in der Klemmstellung kraftschlüssig mit der Antriebshalterung (32) verbinden, und
wobei das Antriebsgehäuse (26) in der Freigabestellung insbesondere stufenlos in eine Einstellrichtung (A) an der Antriebshalterung (32) verschiebbar ist, derart, dass durch die Verschiebung ein Zahnflankenspiel zwischen dem Antriebsritzel (24) und dem Zahnradelement (20) einstellbar ist,
**dadurch gekennzeichnet, dass**
das Antriebsgehäuse (26) in der Freigabestellung durch die Drehung mindestens eines mit dem Verbindungselement (28) koppelbaren Exzenterbolzens (46) gegenüber dem Zahnradelement (20) verschiebbar ist.

2. Drehwerk nach Anspruch 1, **dadurch gekennzeichnet, dass** das erste Bauteil eine Rotornabe (18) und das zweite Bauteil ein Rotorblatt (16) ist oder das erste Bauteil ein Turm (12) und das zweite Bauteil ein Maschinenträger mit einer Gondel (14) ist.

3. Drehwerk nach Anspruch 1, **dadurch gekennzeichnet, dass** das zweite Bauteil eine Rotornabe (18) und das erstes Bauteil ein Rotorblatt (16) ist oder das zweite Bauteil ein Turm (12) und das erste Bauteil ein Maschinenträger mit einer Gondel (14) ist.

4. Drehwerk nach einem der vorangegangenen Ansprüche, **dadurch gekennzeichnet, dass** das Antriebsgehäuse (26) in mehrere, eine Einstellebene aufspannende Einstellrichtungen (A) verschiebbar ist, wobei zumindest einige der Befestigungsmittel (30) in der Freigabestellung eine Verschiebung des Antriebsgehäuses (26) senkrecht zur Einstellebene begrenzen

5. Drehwerk nach einem der vorangegangenen Ansprüche, **dadurch gekennzeichnet, dass** der Exzenterbolzen (46) ein Betätigungselement (50) aufweist, mittels dem der Exzenterbolzen (46) insbesondere unter Ausnutzung eines Hebeleffekts um seine Drehachse drehbar ist.

6. Drehwerk nach einem der vorangegangenen Ansprüche, **dadurch gekennzeichnet, dass** das Antriebsgehäuse (26) bei der Verschiebung an der Antriebshalterung (32) durch mindestens ein Führungselement (54) zwangsgeführt ist.

7. Drehwerk nach Anspruch 6, **dadurch gekennzeichnet, dass** die Drehachse des Exzenterbolzens (46) und mindestens ein Führungselement (54) entlang einer die Drehachse des Zahnradelements (20) schneidenden Geraden positioniert sind.

8. Drehwerk nach einem der vorangegangenen Ansprüche, **dadurch gekennzeichnet, dass** das Antriebsgehäuse (26) derart geführt ist, dass eine Drehbewegung des Exzenterbolzens (46) zumindest bereichsweise in eine etwa gradlinige Bewegung des Antriebsgehäuses (26) umgesetzt wird.

9. Verfahren zur Verschiebung eines Antriebs (22) eines Drehwerks nach einem der vorangegangenen Ansprüche, **gekennzeichnet durch** die Schritte:
Betätigen der Befestigungsmittel (30) in die Freigabestellung zum Lösen der kraftschlüssigen Verbindung zwischen dem Antriebsgehäuse (26) und der Antriebshalterung (32),
Drehen des Exzenterbolzens (46) zur Verschiebung des Antriebsgehäuses (26) an der Antriebshalterung (32),
Betätigen der Befestigungsmittel (30) in die Klemmstellung zum Herstellen einer kraftschlüssigen Verbindung zwischen dem Antriebsgehäuse (26) und der Antriebshalterung (32).

10. Verfahren nach Anspruch 9, **gekennzeichnet durch** eine Auswahl der Schritte:
Koppeln des Exzenterbolzens (46) mit dem Verbindungselement (28) derart, dass eine Drehung des Exzenterbolzens (46) zu einer Verschiebung des Antriebsgehäuses (26) gegenüber dem Zahnradelement (20) führt,
Entkoppeln des Exzenterbolzens (46) von dem Verbindungselement (28).

11. Windenergieanlage mit einem Drehwerk nach einem der vorangegangenen Ansprüche.

## Claims

1. Rotating unit for rotating a first component of a wind turbine (10) in relation to a second component of the wind turbine (10), the first component being mounted in a rotatable manner on the second component, comprising:
a gearwheel element (20), which is arranged on the first component,
a drive (22), which is arranged on the second component by means of a drive holder (32) and has a drive housing (26) and a drive pinion (24) for actuating the gearwheel element (20),
a connecting element (28), which is arranged on the drive housing (26) and is configured for forming a releasable connection between the drive housing (26) and the drive holder (32),
fastening means (30), which interact with the connecting element (28) and can be actuated between a clamping position and a disengagement position,
the fastening means (30) connecting the drive housing (26), in the clamping position, in a force-fitting manner to the drive holder (32), and it being possible for the drive housing (26), in the disengagement position, to be displaced on the drive holder (32) in particular in a stepless manner in an adjustment direction (A) such that, by virtue of the displacement, it is possible to adjust a tooth-flank clearance between the drive pinion (24) and the gearwheel element (20),
**characterized in that**
the drive housing (26), in the disengagement position, can be displaced by virtue of the rotation of at least one eccentric bolt (46), which can be coupled to the connecting element (28), in relation to the gearwheel element (20).

2. Rotating unit according to Claim 1, **characterized in that** the first component is a rotor hub (18) and the second component is a rotor blade (16), or the first component is a tower (12) and the second component is a machinery carrier with a nacelle (14).

3. Rotating unit according to Claim 1, **characterized in that** the second component is a rotor hub (18) and the first component is a rotor blade (16), or the second component is a tower (12) and the first component is a machinery carrier with a nacelle (14).

4. Rotating unit according to one of the preceding claims, **characterized in that** the drive housing (26) can be displaced in a number of adjustment directions (A) spanning an adjustment plane, at least some of the fastening means (30), in the disengagement position, limiting displacement of the drive housing (26) in a direction perpendicular to the adjustment plane.

5. Rotating unit according to one of the preceding claims, **characterized in that** the eccentric bolt (46) has an actuating element (50), by means of which the eccentric bolt (46) can be rotated about its rotary pin in particular utilizing a lever effect.

6. Rotating unit according to one of the preceding claims, **characterized in that** the drive housing (26), during displacement on the drive holder (32), is guided positively by at least one guide element (54).

7. Rotating unit according to Claim 6, **characterized in that** the axis of rotation of the eccentric bolt (46) and at least one guide element (54) are positioned along a straight line which intersects the axis of rotation of the gearwheel element (20).

8. Rotating unit according to one of the preceding claims, **characterized in that** the drive housing (26) is guided such that a rotary movement of the eccentric bolt (46) is converted, at least in certain regions, into an approximately rectilinear movement of the drive housing (26).

9. Method of displacing a drive (22) of a rotating unit according to one of the preceding claims, **characterized by** the following steps:
actuating the fastening means (30) into the disengagement position in order to release the force-fitting connection between the drive housing (26) and the drive holder (32),
rotating the eccentric bolt (46) in order to displace the drive housing (26) on the drive holder (32),
actuating the fastening means (30) into the clamping position in order to establish a force-fitting connection between the drive housing (26) and the drive holder (32).

10. Method according to Claim 9, **characterized by** a selection of the following steps:
coupling the eccentric bolt (46) to the connecting element (28) such that rotation of the eccentric bolt (46) gives rise to displacement of the drive housing (26) in relation to the gearwheel element (20),
uncoupling the eccentric bolt (46) from the connecting element (28).

11. Wind turbine having a rotating unit according to one of the preceding claims.

## Revendications

1. Outil rotatif pour la rotation d'un premier composant d'une éolienne (10) par rapport à un deuxième composant de l'éolienne (10), le premier composant étant supporté de manière rotative sur le deuxième composant, comprenant :
un élément à roue dentée (20) disposé sur le premier composant,
un entraînement (22) disposé sur le deuxième composant au moyen d'une fixation d'entraînement (32), avec un boîtier d'entraînement (26) et un pignon d'entraînement (24) pour l'actionnement de l'élément à roue dentée (20),
un élément de liaison (28) disposé sur le boîtier d'entraînement (26), qui est réalisé pour constituer une liaison amovible entre le boîtier d'entraînement (26) et la fixation d'entraînement (32),
des moyens de fixation (30) coopérant avec l'élément de liaison (28), qui peuvent être actionnés entre une position de blocage et une position de libération,
les moyens de fixation (30) reliant le boîtier d'entraînement (26) dans la position de blocage par engagement par force avec la fixation d'entraînement (32), et
le boîtier d'entraînement (26), dans la position de libération, pouvant être déplacé notamment en continu dans une direction d'ajustement (A) sur la fixation d'entraînement (32) de telle sorte qu'un jeu des flancs de dents entre le pignon d'entraînement (24) et l'élément à roue dentée (20) puisse être établi par le déplacement, **caractérisé en ce que**
le boîtier d'entraînement (26), dans la position de libération, peut être déplacé par rapport à l'élément à roue dentée (20) par la rotation d'au moins un boulon excentrique (46) pouvant être accouplé à l'élément de liaison (28).

2. Outil rotatif selon la revendication 1, **caractérisé en ce que** le premier composant est un moyeu de rotor (18) et le deuxième composant est une lame de rotor (16) ou le premier composant est une tour (12) et le deuxième composant est un support de machine avec une nacelle (14).

3. Outil rotatif selon la revendication 1, **caractérisé en ce que** le deuxième composant est un moyeu de rotor (18) et le premier composant est une lame de rotor (16) ou le deuxième composant est une tour (12) et le premier composant est un support de machine avec une nacelle (14).

4. Outil rotatif selon l'une quelconque des revendications précédentes, **caractérisé en ce que** le boîtier d'entraînement (26) peut être déplacé dans plusieurs directions d'ajustement (A) couvrant un plan d'ajustement, au moins certains des moyens de fixation (30) limitant, dans la position de libération, un déplacement du boîtier d'entraînement (26) perpendiculairement au plan d'ajustement.

5. Outil rotatif selon l'une quelconque des revendications précédentes, **caractérisé en ce que** le boulon excentrique (46) présente un élément d'actionnement (50) au moyen duquel le boulon excentrique (46) peut tourner autour de son axe de rotation notamment en utilisant un effet de levier.

6. Outil rotatif selon l'une quelconque des revendications précédentes, **caractérisé en ce que** le boîtier d'entraînement (26), lors du déplacement sur la fixation d'entraînement (32) est guidé par force par au moins un élément de guidage (54).

7. Outil rotatif selon la revendication 6, **caractérisé en ce que** l'axe de rotation du boulon excentrique (46) et au moins un élément de guidage (54) sont positionnés le long d'une droite coupant l'axe de rotation de l'élément à roue dentée (20).

8. Outil rotatif selon l'une quelconque des revendications précédentes, **caractérisé en ce que** le boîtier d'entraînement (26) est guidé de telle sorte qu'un mouvement de rotation du boulon excentrique (46) soit converti au moins en partie en un déplacement approximativement linéaire du boîtier d'entraînement (26).

9. Procédé pour déplacer un entraînement (22) d'un outil rotatif selon l'une quelconque des revendications précédentes, **caractérisé par** les étapes suivantes :
actionnement des moyens de fixation (30) dans la position de libération pour libérer la liaison par engagement par force entre le boîtier d'entraînement (26) et la fixation d'entraînement (32),
rotation du boulon excentrique (46) pour déplacer le boîtier d'entraînement (26) sur la fixation d'entraînement (32),
actionnement des moyens de fixation (30) dans la position de blocage pour établir une liaison par engagement par force entre le boîtier d'entraînement (26) et la fixation d'entraînement (32).

10. Procédé selon la revendication 9, **caractérisé par** une sélection des étapes suivantes :
accouplement du boulon excentrique (46) à l'élément de liaison (28) de telle sorte qu'une rotation du boulon excentrique (46) conduise à un déplacement du boîtier d'entraînement (26) par rapport à l'élément à roue dentée (20),
désaccouplement du boulon excentrique (46) de l'élément de liaison (28).

11. Éolienne comprenant un outil rotatif selon l'une quelconque des revendications précédentes.
